# FASCICULE DE BREVET EUROPEEN

(11) **EP 0 878 346 B1**
(45) Date de publication et mention de la délivrance du brevet: **27.03.2002**
(21) Numéro de dépôt: 98401113.0
(22) Date de dépôt: 07.05.1998
(51) Int. Cl.: B60N 2/22

(54) **Articulation perfectionnée pour siège, notamment pour véhicule automobile, et siège muni de cette articulation**
Gelenkbeschlag für Kraftfahrzeugsitze
Hinge fitting for automotive vehicle seat

(30) Priorité: 15.05.1997 FR 9706000
(43) Date de publication de la demande: 18.11.1998
(73) Titulaire: FAURECIA SIEGES D'AUTOMOBILES S.A., 92100 Boulogne (FR)
(72) Inventeur: Blanchard, Jean-Marie, 45290 Nogent sur Vernisson (FR); Delatte, Olivier, 45290 Nogent sur Vernisson (FR); Di Luccio, Michel, 45290 Nogent sur Vernisson (FR); Guillemard, Philippe, 45290 Nogent sur Vernisson (FR); Rager, Sylvain, 45290 Nogent sur Vernisson (FR)
(74) Mandataire: Burbaud, Eric

(56) Documents cités:
- EP-A- 0 741 056
- EP-A- 0 773 132
- FR-A- 2 722 150
- FR-A- 2 739 812

## Description

La présente invention concerne une articulation perfectionnée pour siège, notamment pour véhicule automobile, et un siège muni de cette articulation.

On connaît déjà dans l'état de la technique une articulation pour siège, notamment pour véhicule automobile, du type comprenant :
- deux flasques de liaison dont l'un, fixe, est destiné à être fixé à une assise du siège, et l'autre, mobile, est destiné à être fixé à un dossier du siège, ces flasques pouvant tourner l'un par rapport à l'autre autour d'un axe d'articulation qui leur est sensiblement perpendiculaire,
- un organe de commande d'articulation monté rotatif autour de l'axe d'articulation dans au moins un sens à partir d'une position de repos, et
- des moyens de rappel élastique de l'organe de commande dans sa position de repos comportant des moyens de positionnement approché de cet organe de commande.

FR-A-2 739 812 (FR-95 12 159) décrit une articulation de ce type comportant des moyens de couplage des flasques entre eux actionnés par deux bagues rotatives comprenant chacune un ergot ménagé sur leur contour interne. L'organe de commande est muni d'une came interposée entre les deux ergots. Les moyens de rappel tendent à placer l'organe de commande en position de repos approchée par coopération des deux ergots avec la came de l'organe de commandé. Cette position approchée est acceptable dans la mesure où il est prévu un jeu angulaire entre les ergots et la came de l'organe de commande, de part et d'autre de cette came.

Toutefois, un tel jeu angulaire peut, dans certains cas, être à l'origine, d'une part, de vibrations indésirables de l'organe de commande, et d'autre part d'une imprécision de la position de la poignée de manoeuvre reliée habituellement à l'organe de commande.

L'invention a pour but d'affiner la position de repos approchée de l'organe de commande imposée par les moyens de rappel élastique.

A cet effet, l'invention a pour objet une articulation pour siège, notamment pour véhicule automobile, du type précité, caractérisée en ce que les moyens de rappel élastique comportent également des moyens de positionnement précis de l'organe de commande distincts des moyens de positionnement approchés, ces moyens distincts comprenant au moins un ressort en poussée en appui entre le flasque fixe et l'organe de commande et affinant la position de repos approchée dudit organe de commande.

Suivant d'autres caractéristiques de cette articulation :
- l'organe de commande a une forme générale cylindrique et est porté par au moins un palier ménagé dans le flasque fixe, et ledit ressort de poussée est en appui radial entre le flasque fixe et un méplat de positionnement de l'organe de commande, de manière à solliciter le méplat dans une position coïncidant avec la position de repos précise de l'organe de commande ;
- le ressort de poussée a une forme générale de lame pliée en U comportant deux branches planes en appui radial, l'une fixe, contre un bord d'un dégagement du contour du palier, et l'autre mobile, contre le méplat de positionnement, le ressort de poussée sollicitant le méplat dans une position sensiblement parallèle à celle de ces branches ;
- le méplat est délimité par une surface sensiblement concave, de manière à limiter le contact de la branche mobile avec ce méplat sensiblement à deux génératrices de commande ;
- l'extrémité libre de la branche mobile comporte deux pattes d'accrochage interposées entre une face du flasque fixe et un épaulement de l'organe de commande, les pattes d'accrochage s'étendant transversalement à l'organe de commande, de part et d'autre de cet organe ;
- les pattes d'accrochage sont logées dans un décrochement de la face du flasque fixe compensant l'épaisseur des pattes ;
- l'articulation comporte en outre des moyens de couplage des flasques entre eux actionnés par deux bagues rotatives, centrées sensiblement sur l'axe d'articulation, comprenant chacune un ergot ménagé sur leur contour interne, l'organe de commande étant muni d'une came interposée entre les deux ergots, destinée à coopérer sélectivement avec ces deux ergots, par rotation dans des sens opposés, les moyens de positionnement approché de l'organe de commande comportant un ressort à effet angulaire accroché sur les ergots de manière à rappeler élastiquement les bagues dans des sens opposés tendant à placer l'organe de commande en position de repos par coopération des deux ergots avec la came de l'organe de commande ;
- le ressort est constitué par un anneau fendu dont les bords axiaux sont accrochés dans les ergots ;
- les bagues sont déplaçables dans deux sens opposés respectivement de réglage d'inclinaison et de rabattement du dossier, entre une première position d'assujettissement d'au moins un organe de couplage respectivement aux premier et second flasques et une seconde position de libération de cet organe ;
- l'organe de couplage est constitué par un levier pouvant basculer autour d'un point d'appui qui, lorsque ce levier est assujetti à un flasque, est fixe par rapport à ce même flasque.

L'invention a également pour objet un siège pour véhicule automobile muni d'au moins une articulation telle que définie ci-dessus.

L'invention sera mieux comprise à la lecture de la description qui va suivre donnée uniquement à titre d'exemple et faite en se référant aux dessins dans lesquels:
- la figure 1 est une vue schématique en perspective d'un siège pour véhicule automobile muni d'au moins une articulation selon l'invention ;
- la figure 2 est une vue en perspective de cette articulation ;
- la figure 3 est une vue éclatée de l'articulation représentée à la figure 2 ;
- les figures 4 et 5 sont des vues de face, respectivement suivant les flèches 4 et 5, de l'articulation représentée à la figure 2, avec un arrachement du flasque de liaison pointé par les flèches 4 et 5 donnant accès visuellement à l'intérieur de l'articulation, les leviers de couplages étant dans leur position d'assujettissement aux flasques de liaison;
- la figure 6 est une vue similaire à la figure 4 dans laquelle les leviers de couplage sont dans leur position de libération de leur flasque de liaison correspondant;
- les figures 7 et 8 sont des vues suivant la flèche 7 de la figure 3 montrant l'organe de commande de l'articulation dans deux positions différentes respectivement ;
- les figures 9 et 10 sont des demi-vues similaires à la figure 5, à échelle agrandie, montrant l'articulation respectivement avant et après avoir subi un couple accidentel.

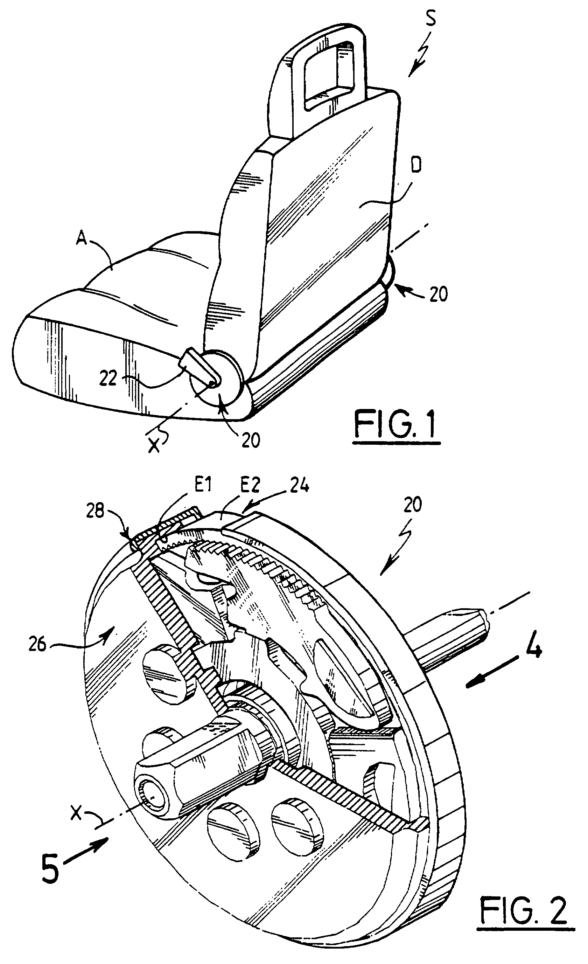

On a représenté sur la figure 1 un siège S pour véhicule automobile comportant un dossier D relié à une assise A par deux articulations 20 selon l'invention.

Les articulations 20 sont du même type que celui décrit dans FR-A-2 722 150 (FR-94 08 297) concernant une articulation dite "à mémoire". Ce type d'articulation permet notamment de rabattre le dossier du siège sur l'assise de ce dernier, par exemple pour accéder à une place à l'arrière de ce siège, et de relever le dossier en position d'utilisation, ceci sans modifier le réglage de l'inclinaison du dossier.

Chaque articulation 20 est la symétrique spéculaire de l'autre articulation.

Les articulations 20 sont commandées de préférence par une poignée 22 commune à ces deux articulations.

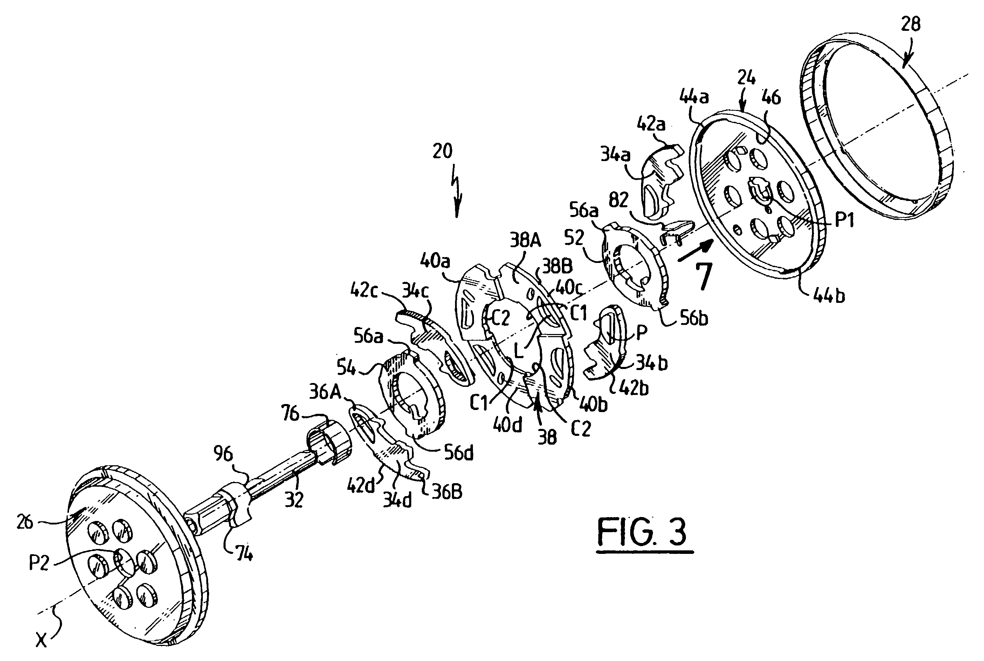

En se référant notamment aux figures 2 et 3, sur lesquelles on a représenté une articulation 20 plus en détail, on voit que celle-ci comporte deux flasques de liaison 24,26 de forme générale circulaire, l'un, fixe, étant fixé sur l'assise A, et l'autre, mobile, étant fixé sur le dossier D.

Les flasques de liaison 24,26 sont montés rotatifs l'un par rapport à l'autre autour d'un axe d'articulation X qui leur est sensiblement perpendiculaire, et sont maintenus l'un contre l'autre de façon connue en soi au moyen d'une bague de liaison 28.

Les flasques de liaison 24,26 sont centrés l'un par rapport à l'autre par des épaulements périphériques complémentaires E1,E2, coaxiaux à l'axe d'articulation X.

Les flasques de liaison 24,26 délimitent entre eux un logement pour des moyens 30 de couplage de ces flasques. Ces moyens 30 sont commandés par un organe 32 de forme générale cylindrique circulaire, sur lequel est fixée de façon connue en soi la poignée de commande 22.

L'organe de commande 32 est monté rotatif autour de l'axe d'articulation X dans deux paliers P1,P2, ménagés dans les flasques de liaison 24,26.

L'organe de commande 32 est déplaçable, par l'intermédiaire de la poignée 22, dans deux sens opposés à partir d'une position de repos, à savoir un sens horaire de réglage de l'inclinaison du dossier par rapport à l'assise et un sens anti-horaire de rabattement de ce dossier.

Les organes de commande 32 des deux articulations 20 sont reliés entre eux par un dispositif de couplage classique.

Les moyens de couplage 30 comprennent quatre leviers 34a à 34d, de préférence identiques, en forme générale d'arc, s'étendant sensiblement parallèlement aux flasques de liaison 24,26.

Une première extrémité 36A des leviers de couplage 34a à 34d est montée pivotante sur un flasque support 38 de forme générale circulaire, logé entre les flasques de liaison 24,26 de manière à pouvoir tourner par rapport à ces derniers autour de l'axe d'articulation X. Les flasques de liaison 24,26 et le flasque support 38 sont sensiblement parallèles entre eux.

La seconde extrémité 36B des leviers 34a à 34d est destinée à être assujettie à un flasque de liaison correspondant, par coopération de formes complémentaires définissant, lorsqu'elles sont en prise, une zone d'assujettissement du levier de couplage.

Chaque levier de couplage 34a à 34b est donc déplaçable autour de son axe de pivotement entre une position d'assujettissement de sa seconde extrémité 36B avec un flasque de liaison 34a à 34b correspondant et une position de libération de cette seconde extrémité 36B.

Les leviers de couplage 34a à 34d sont associés par paires aux flasques de liaison 24,26. Les deux leviers d'une même paire sont sensiblement symétriques par rapport à l'axe d'articulation X et sont articulés sur une même face 38A,38B du flasque-support, de manière que les quatre leviers 34a à 34d alternent sur les deux faces 38A,38D du flasque-support. Ces leviers 34a à 34d sont articulés sur des secteurs 40a à 40d du flasque-support décalés en alternance parallèlement à l'axe d'articulation X.

On notera que le flasque-support 38 peut être assujetti, par couplage avec l'un et/ou l'autre des flasques de liaison 24,26 au moyen des leviers 34a à 34d, à l'assise et/ou au dossier du siège.

Les formes complémentaires d'assujettissement sont délimitées de préférence par des dentures complémentaires. Ainsi, la seconde extrémité 36B des leviers de couplage 34a à 34d comporte un secteur denté 42a à 42d.

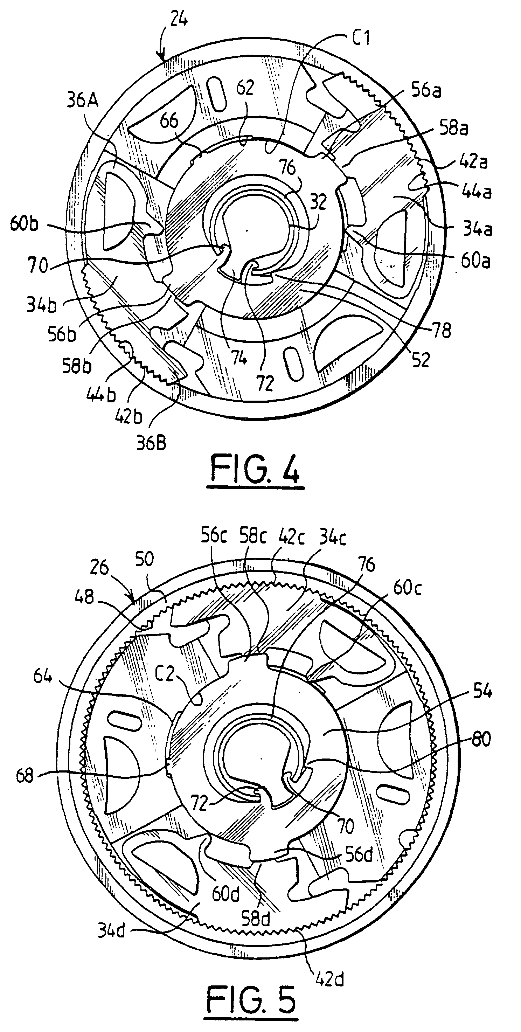

Les secteurs dentés 42a,42b de la paire de leviers de couplage 34a,34b associés au flasque fixe 24 sont destinés à coopérer avec des secteurs dentés 44a,44b de même angle ménagés sur le contour intérieur d'un épaulement périphérique 46 de ce flasque fixe 24, visible notamment sur les figures 3 et 4.

Les secteurs dentés 42c,42d de la paire de leviers de couplage 34c,34d associés au flasque mobile 26 sont destinés à coopérer avec un secteur denté 48 d'angle supérieur ménagé sur le contour intérieur d'un épaulement périphérique 50 du flasque mobile 26, visible notamment sur la figure 5. De préférence, ce secteur denté 48 s'étend sur toute la circonférence de l'épaulement 50 de manière à former une couronne dentée.

La première extrémité 36A des leviers de couplage 34a à 34b porte un pion de pivotement P, formé par exemple par une semi-découpe de cette extrémité 36A, monté pivotant dans une lumière de pivotement L ménagée dans le secteur correspondant 40a à 40d du flasque-support 38. Le pion P et la lumière L matérialisent un axe de pivotement de levier de couplage sensiblement parallèle à l'axe de rotation X.

Le pion P et la lumière L de basculement ont par exemple des formes générales en demi-lunes, la lumière L s'étendant suivant un secteur plus grand que celui du pion P.

On notera que chaque levier de couplage 34a à 34d peut basculer autour d'un point d'appui (matérialisé par la lumière L de basculement de ce levier) qui, lorsque ce levier est assujetti à un flasque de liaison 24,26, est fixe par rapport à ce même flasque.

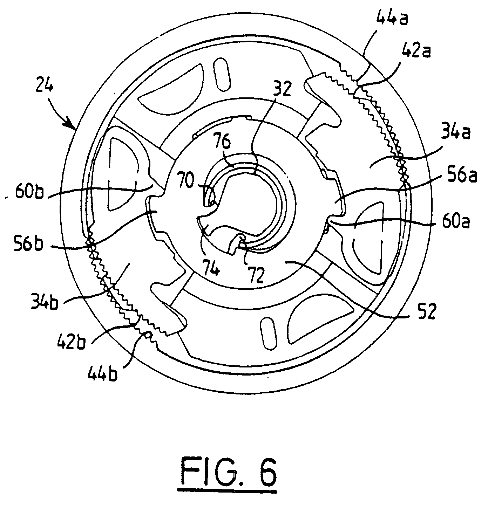

L'organe de commande 32 actionne des moyens de manoeuvre des leviers de couplage 34a à 34 d. Ces moyens de manoeuvre permettent de placer les leviers dans une configuration de repos, telle que représentée sur les figures 4 et 5, dans laquelle les deux flasques de liaison 24,26 sont couplés entre eux, et dans deux configurations actives alternatives, dont une seule est représentée sur la figure 6, dans laquelle les deux flasques de liaison 24,26 sont découplés.

Le fonctionnement normal d'une articulation à mémoire du type illustré sur les figures, pour le réglage de l'inclinaison et le rabattement du dossier est classique. Ce fonctionnement est décrit, par exemple, dans FR-A-2 720 250 (FR-94 08 297) dans lequel, notamment, les pênes 53 et grains 43 sont analogues aux leviers 34a à 34d décrits ci-dessus.

Dans la configuration de repos, les leviers de couplage 34a à 34d sont tous assujettis aux flasques de liaison 24,26, pour coupler ces derniers et immobiliser le dossier par rapport à l'assise.

Dans les deux configurations actives alternatives, une seule des paires de leviers de couplage 34a à 34d est assujettie au flasque de liaison 24,26 correspondant pour permettre, alternativement, le réglage de l'inclinaison du dossier ou, comme dans le cas représenté à la figure 6, le rabattement temporaire de ce dossier.

Les moyens de manoeuvre comprennent deux bagues rotatives 52,54 centrées sur l'axe d'articulation X, par exemple au moyen de deux paires d'arcs circulaires C1,C2, délimitant une ouverture centrale du flasque-support 38, coopérant avec les contours externes des bagues. Les arcs de centrage C1,C2 d'une même paire délimitent deux secteurs diamétralement opposés 40c,40d,40a,40b du flasque-support 38.

Les bagues 52,54 sont déplaçables dans deux sens opposés pour le réglage d'inclinaison et le rabattement du dossier respectivement. A cet effet, chaque bague 52,54 est associée à une paire de leviers de couplage 34a à 34d, de manière à être déplaçable entre une première position d'assujettissement des leviers de cette paire au flasque de liaison 24,26 correspondant et une seconde position de libération de ces leviers.

En se référant notamment aux figures 4 à 6, on voit que chaque bague 52,54 comprend une paire de cames de manoeuvre 56a à 56d, diamétralement opposées, délimitées par des bossages ménagés sur le contour externe de la bague.

Lorsqu'une bague 52,54 est dans sa première position d'assujettissement, comme cela est représenté sur les figures 4 et 5, chaque came de manoeuvre 56a à 56d coopère avec une contre-came de coincement 58a à 58d, délimitée par un bossage ménagé sur le contour interne d'un levier de couplage 34a à 34d correspondant, à proximité de la seconde extrémité 368 de ce levier.

Lorsqu'une bague 52,54 est dans sa seconde position de libération, comme cela est représenté sur la figure 6 (dans le cas de la bague 52), chaque came de manoeuvre 56a à 56d coopère avec une contre-came de basculement 60a à 60d, délimitée par un bossage ménagé sur le contour interne d'un levier de couplage 34a à 34d correspondant, à proximité de la première extrémité 36A de ce levier.

On notera que le déplacement angulaire de chaque bague 52,54 est limité par la dimension angulaire d'un dégagement 62,64, ménagé dans un arc de centrage C1,C2 correspondant, dans lequel s'étend un onglet 66,68 solidaire du contour externe de la bague 52,54.

Les bagues 52,54 comprennent chacune un ergot de déplacement 70,72 ménagé sur leur contour interne.

L'organe de commande 32 est muni d'une came 74 de déplacement des bagues 52,54, interposée entre les deux ergots 70,72. La came de déplacement 74 coopère sélectivement avec les deux ergots 70,72, qui forment ainsi des contre-cames de déplacement, par rotation dans des sens opposés de réglage d'inclinaison et de rabattement du dossier respectivement.

Lorsque les moyens de manoeuvre sont dans la configuration de repos, l'organe de commande 32 est dans la position de repos telle que représentée aux figures 4 et 5, vers laquelle il est rappelé élastiquement par des moyens qui seront décrits ci-dessous.

Les moyens de rappel élastique comprennent des moyens de positionnement approché de l'organe de commande.

Ces moyens de positionnement approché comportent un ressort 76 à effet angulaire accroché sur les ergots 70,74 de manière à rappeler élastiquement les bagues 52,54 dans des sens opposés, vers leur position d'assujettissement, c'est-à-dire leur position de coopération des cames de manoeuvre 56a à 56d avec les contre-cames de coincement 58a à 58c.

Ainsi, le ressort 76 rappelle l'organe de commande 32 en position de repos approchée par coopération des deux ergots 70,72 avec la came de déplacement 74 de cet organe de commande.

Le ressort 76 est constitué par exemple par un anneau fendu dont les bords axiaux sont accrochés dans les ergots 70,72.

De préférence, chaque bague 52,54 comporte un bossage 78,80 ménagé sur son contour interne, de l'autre côté de son ergot 70,72 par rapport à la came d'entraînement 74 de l'organe de commande, de manière à participer au positionnement et au centrage du ressort 76 à effet angulaire.

Les moyens de rappel élastique comprennent également des moyens de positionnement précis de l'organe de commande 32 affinant la position de repos approchée de cet organe 32, représentés sur les figures 3,7 et 8.

Ces moyens de positionnement précis comprennent au moins un ressort de poussée 82, en forme de lame pliée en U, comportant deux branches planes 84,86 s'étendant sensiblement longitudinalement parallèlement à l'axe d'articulation X.

Une première branche 84, fixe, est en appui radial contre le flasque fixe 24, plus particulièrement contre le bord d'un dégagement 88 du contour du palier P1.

La seconde branche 86, mobile, est en appui radial contre un méplat 90 de positionnement de l'organe de commande 32.

Le ressort de poussée 82 sollicite le méplat 90 dans une position sensiblement parallèle à celle de ses branches 84,86 coïncidant avec la position de repos précise de l'organe de commande 32.

De préférence, le méplat 90 est délimité par une surface sensiblement concave, de manière à limiter le contact de la branche mobile 86 avec ce méplat 90 sensiblement à deux génératrices de l'organe de commande 32.

L'extrémité libre de la branche mobile 86 comporte deux pattes d'accrochage 92,94, sensiblement perpendiculaires à l'axe d'articulation X. Ces pattes 92,94 sont destinées à immobiliser axialement le ressort de poussée 82 et, à cet effet, sont interposées entre la face interne du flasque fixe 24 et un épaulement 96 de l'organe de commande, visible sur la figure 3.

Les pattes d'accrochage 92,94 s'étendent transversalement à l'organe de commande 32, de part et d'autre de ce dernier, et sont logées, de préférence, dans un décrochement 98 de la face interne du flasque fixe 24 compensant l'épaisseur de ces pattes.

En variante, l'articulation peut comporter deux ressorts de poussée 82, coopérant avec deux méplats 90, agencés de façon diamétralement opposée dans le flasque fixe 24.

Bien entendu, on peut envisager d'autres formes du ressort de poussée permettant de le placer en appui radial entre le bord du dégagement 88 et le méplat de positionnement 90 de manière à solliciter ce dernier dans une position coïncidant avec la position de repos précise de l'organe de commande.

Le fonctionnement des moyens de rappel élastique de l'organe de commande 32 se déduit clairement de leur description ci-dessus.

En particulier, on notera que lorsqu'on fait tourner l'organe de commande 32 de sa position de repos vers une position active de déplacement d'une des bagues 52,54, comme cela est représenté sur la figure 6, le ressort 76 à effet angulaire se déforme par augmentation de son diamètre. Le ressort 76 s'appuie par un de ses bords axiaux sur l'ergot 70,72 de la bague 52,54 qui reste fixe en renforçant ainsi l'assujettissement au flasque de liaison correspondant des leviers de couplage associés à cette bague.

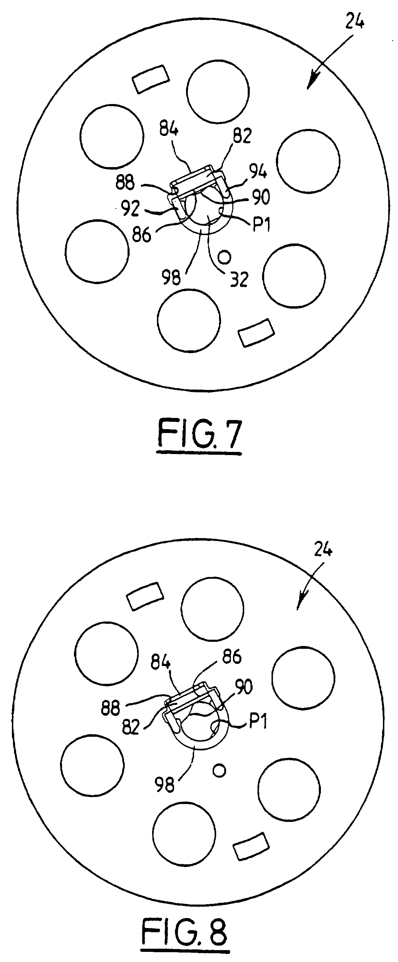

De même, lorsqu'on fait tourner l'organe de commande 32 dans un sens ou dans l'autre, à partir de sa position de repos, le ressort de poussée 82 se déforme élastiquement par rapprochement de ces branches 84,86, de manière à permettre la rotation de cet organe de commande 32 dans le palier P1, comme cela est représenté sur la figure 8.

L'articulation 20 comporte également des moyens de blocage de la seconde extrémité 36B des leviers de couplage 34a à 34d en position d'assujettissement.

Ces moyens de blocage sont activés uniquement lorsque les flasques de liaison 24,26 et le flasque-support 38 sont couplés entre eux, c'est-à-dire lorsque l'organe de commande 32 est en position de repos, et lorsque ces flasques 24,26,38 subissent un couple tendant à les découpler accidentellement.

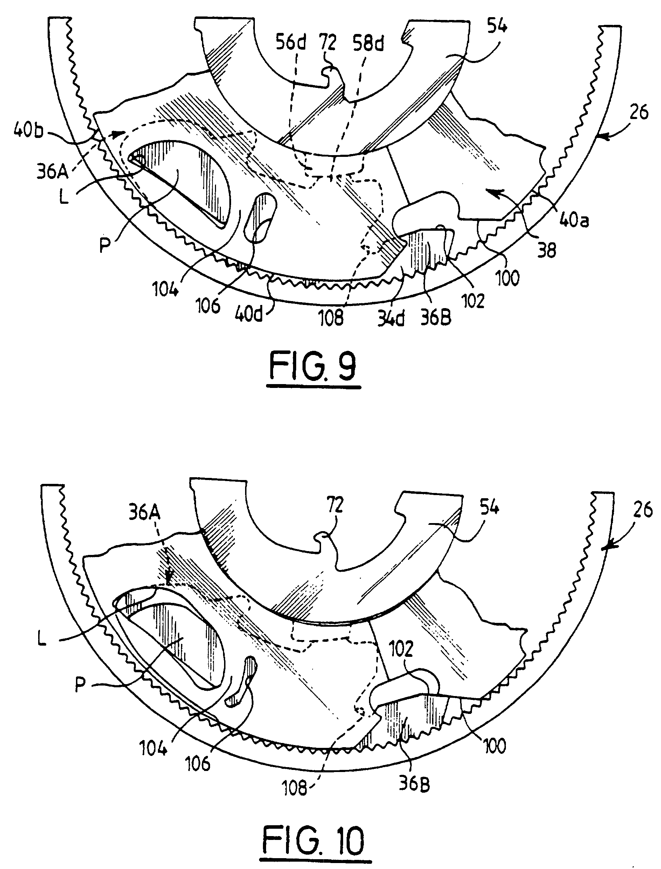

En se référant notamment aux figures 9 et 10, on voit que les moyens de blocage comprennent, pour chaque levier de couplage 34a à 34d, deux rampes complémentaires de blocage 100,102 ménagées respectivement sur le flasque-support 38 et sur la seconde extrémité 36B du levier de couplage, et d'autre part, une zone d'affaiblissement du flasque-support 38.

Chaque rampe de blocage 100 portée par le flasque-support 38 est ménagée sur un secteur 40a à 40d de ce flasque-support adjacent à un secteur 40a à 40d sur lequel est articulé le levier 34a à 34d, portant la rampe de blocage complémentaire 102.

Lorsqu'un levier de couplage 34a à 34d est en position d'assujettissement, les rampes de blocage 100,102 correspondantes sont écartées entre elles, comme cela est représenté sur les figures 4,5 et 9.

La zone d'affaiblissement du flasque-support 38, associée à un levier de couplage 34a à 34d correspondant, comporte de préférence une portion 104 de ce flasque-support 38 s'étendant entre la lumière de pivotement L et une lumière d'affaiblissement 106 ménagée dans le flasque-support 38, à proximité de la lumière de pivotement L et entre cette dernière et la rampe de blocage 100 portée par le flasque-support 38.

La lumière d'affaiblissement 106 peut avoir diverses formes, par exemple oblongue (comme cela est représenté notamment sur la figure 9) ou circulaire.

La zone d'affaiblissement du flasque-support, associée à chaque levier de couplage 34a à 34d, se déforme lorsque les flasques de l'articulation subissent un couple accidentel, de manière à permettre le déplacement relatif du levier de couplage par rapport au flasque-support 38 jusqu'à mise en contact des rampes de blocage 100,102, comme cela est représenté sur la figure 10. Ces rampes 100,102 coopèrent alors pour bloquer la seconde extrémité 36B du levier de couplage en position d'assujettissement dans laquelle les dentures de ce levier sont en prise avec celles du flasque de liaison correspondant.

De préférence, le contour intérieur courbe des leviers de couplage 34a à 34d comporte une échancrure 108 d'affaiblissement de ces leviers permettant, lorsque les flasques de l'articulation subissent un couple accidentel, une déformation de ces leviers par modification de leur courbure. Cette modification de courbure facilite la coopération des rampes de blocage 100,102.

L'articulation 20 est particulièrement bien adaptée pour résister à un couple subit accidentellement lorsque les flasques de liaison 24,26 sont couplés entre eux.

En effet, si le couple accidentel est appliqué dans le sens du coincement des cames de manoeuvre 56a à 56d avec les contre-cames de coincement 58a à 58d, l'assujettissement des leviers de couplage 34a à 34d aux flasques de liaison 24,26 correspondants est renforcé, ce qui empêche le découplage accidentel de ces flasques de liaison.

Si le couple accidentel est appliqué à l'encontre de l'effet de coincement entre les cames de manoeuvre 56a à 56d et les contre-cames de coincement 58a à 58d (c'est-à-dire si le couple accidentel est appliqué dans un sens d'écartement de l'axe de pivotement des leviers de couplage 34a à 34d et de la zone d'assujettissement de ces leviers), ce couple déforme les zones d'affaiblissement du flasque-support 38 de manière à faire coopérer les rampes de blocage 100,102 et renforcer l'assujettissement des leviers de couplage 34a à 34d aux flasques de liaison 24,26 correspondants.

Ainsi, quel que soit le sens du couple accidentel, il n'y a pas de risque de découplage des flasques de liaison 24,26.

L'invention ne se limite pas au mode de réalisation illustré sur les figures.

En particulier, l'articulation 20 selon l'invention n'est pas nécessairement une articulation du type à mémoire et peut être prévue, par exemple, pour réaliser uniquement la fonction de réglage de l'inclinaison du dossier sans la fonction de basculement de ce dernier. Dans ce cas, le flasque-support est constitué par le flasque de liaison fixe, l'articulation ne comportant qu'une paire de leviers de couplage, voire un seul levier de couplage.

## Revendications

1. Articulation pour siège, notamment pour véhicule automobile, du type comprenant :
- deux flasques de liaison (24, 26) dont l'un, fixe, est destiné à être fixé à une assise (A) du siège, et l'autre, mobile, est destiné à être fixé à un dossier (D) du siège, ces flasques (24, 26)pouvant tourner l'un par rapport à l'autre autour d'un axe d'articulation (X) qui leur est sensiblement perpendiculaire,
- un organe de commande d'articulation (32) monté rotatif autour de l'axe d'articulation (X) dans au moins un sens à partir d'une position de repos, et
- des moyens de rappel élastique de l'organe de commande (32) dans sa position de repos comportant des moyens (76) de positionnement approché de cet organe de commande (32),
**caractérisée en ce que** les moyens de rappel élastique comportent également des moyens (82)de positionnement précis de l'organe de commande (32) distincts des moyens de positionnements approché (76), ces moyens distincts (82) comprenant au moins un ressort en poussée en appui entre le flasque fixe et l'organe de commande (32) et affinant la position de repos approchée dudit organe de commande (32).

2. Articulation selon la revendication 1, **caractérisée en ce que** l'organe de commande (32) a une forme générale cylindrique et est porté par au moins un palier (P1) ménagé dans le flasque fixe (24) et **en ce que** ledit ressort de poussée (82) est en appui radial entre le flasque fixe (24) et un méplat (90) de positionnement de l'organe de commande (32), de manière à solliciter le méplat (90) dans une position coïncidant avec la position de repos précise de l'organe de commande.

3. Articulation selon la revendication 2, **caractérisée en ce que** le ressort de poussée (82) a une forme générale de lame pliée en U comportant deux branches planes (84,86) en appui radial, l'une, fixe, contre un bord d'un dégagement (88) du contour du palier (P1), et l'autre, mobile, contre le méplat de positionnement (90), le ressort de poussée (82) sollicitant le méplat (90) dans une position sensiblement parallèle à celle de ces branches (84,86).

4. Articulation selon la revendication 2 ou 3, **caractérisée en ce que** le méplat (90) est délimité par une surface sensiblement concave, de manière à limiter le contact de la branche mobile (86) avec ce méplat (90) sensiblement à deux génératrices de l'organe de commande (32).

5. Articulation selon la revendication 3 ou 4, **caractérisée en ce que** l'extrémité libre de la branche mobile (86) comporte deux pattes d'accrochage (92,94) interposées entre une face du flasque fixe (24) et un épaulement (96) de l'organe de commande (32), les pattes d'accrochage (92,94) s'étendant transversalement à l'organe de commande (32), de part et d'autre de cet organe (32).

6. Articulation selon la revendication 5, **caractérisée en ce que** les pattes d'accrochage (92,94) sont logées dans un décrochement (98) de la face du flasque fixe (24) compensant l'épaisseur des pattes.

7. Articulation selon l'une quelconque des revendications précédentes, **caractérisée en ce qu'**elle comporte en outre des moyens (30) de couplage des flasques (24,26) entre eux actionnés par deux bagues rotatives (52,54), centrées sensiblement sur l'axe d'articulation (X), comprenant chacune un ergot (70,72) ménagé sur leur contour interne, l'organe de commande étant muni d'une came (74) interposée entre les deux ergots (70,72), destinée à coopérer sélectivement avec ces deux ergots (70,72), par rotation dans des sens opposés, les moyens de positionnement approché de l'organe de commande (32) comportant un ressort (76) à effet angulaire accroché sur les ergots (70,72) de manière à rappeler élastiquement les bagues dans des sens opposés tendant à placer l'organe de commande (32) en position de repos par coopération des deux ergots (70,72) avec la came de l'organe de commande.

8. Articulation selon la revendication 7, **caractérisée en ce que** le ressort (76) est constitué par un anneau fendu dont les bords axiaux sont accrochés dans les ergots (70,72).

9. Articulation selon la revendication 7 ou 8, **caractérisée en ce que** les bagues (52,54) sont déplaçables dans deux sens opposés respectivement de réglage d'inclinaison et de rabattement du dossier, entre une première position d'assujettissement d'au moins un organe de couplage (34a à 34d) respectivement aux premier et second flasques (24,26) et une seconde position de libération de cet organe (34a à 34d).

10. Articulation selon la revendication 9, **caractérisée en ce que** l'organe de couplage est constitué par un levier (34a à 34d) pouvant basculer autour d'un point d'appui (L) qui, lorsque ce levier est assujetti à un flasque (24,26), est fixe par rapport à ce même flasque (24,26).

11. Siège pour véhicule automobile, **caractérisé en ce qu'**il comprend au moins une articulation (20) selon l'une quelconque des revendications précédentes.

## Claims

1. A hinge for a seat, in particular for an automobile vehicle, comprising:
- two connecting flanges (24, 26), one of which is fixed and is adapted to be fixed to a seat cushion (A) and the other which is mobile and is adapted to be fixed to a seat squab (D), said flanges (24, 26) being adapted to turn relative to each other about a hinge axis (X) that is substantially perpendicular to them,
- a hinge control member (32) mounted to rotate about the hinge axis (X) at least one way from a rest position, and
- means for spring loading the control member (32) into its rest position including means (76) for approximate positioning of said control member (32),
**characterized in that** the spring loading means also include means (82) for accurate positioning of the control member (32) separate from the approximate positioning means (76) said separate means (82) comprising at least a one thrust spring bearing between the fixed flange and the control member (32) and refining the approximate rest position of said control member (32).

2. A hinge according to claim 1, **characterized in that** the control member (32) has a generally cylindrical shape and is carried by at least one bearing (P1) in the fixed flange (24) and **in that** said thrust spring (82) bears radially between the fixed flange (24) and a flat (90) for positioning the control member (32) so as to spring load of the flat (90) into a position coinciding with the accurate rest position of the control member.

3. A hinge according to claim 2, **characterized in that** the thrust spring (82) is a generally U shape leaf spring having two plane branches (84, 86) in radial bearing engagement, a fixed branch against an edge of a recess (88) in the contour of the bearing (P1) and a mobile branch against the positioning flat (90), the thrust spring (82) spring loading the flat (90) into a position substantially parallel to that of its branches (84, 86).

4. A hinge according to claim 2, **characterized in that** the flat (90) is delimited by a substantially concave surface so as to limit contact of the mobile branch (86) with the flat (90) substantially to two generatrices of the control member (32).

5. A hinge according to claim 3, **characterized in that** the free end of the mobile branch (86) has two attachments lugs (92, 94) disposed between one face of the fixed flange (24) and a shoulder (96) on the control member (32), the attachment lugs (92, 94) extending transversely to the control member (32), on respective opposite sides of said member (32).

6. A hinge according to claim 5, **characterized in that** the attachment lugs (92, 94) are housed in a recess (98) on the face of the fixed flange (24) compensating the thickness of the lugs.

7. A hinge according to claim 1, **characterized in that** it further includes means (30) for coupling the flanges (24, 26) together actuated by two rotary rings (52, 54) centred substantially on the hinge axis (X), each comprising a lug (70, 72) on their inside contour, the control member being provided with a cam (74) disposed between the two lugs (70, 72), adapted to cooperate selectively with said two lugs (70, 72) by rotating in opposite directions, the approximate positioning means for the control member (32) including a circumferentially acting spring (76) hooked onto the lugs (70, 72), so as to spring load the rings in opposite directions tending to place the control member (32) in its rest position by cooperation of the two lugs (70, 72) with the cam of the control member.

8. A hinge according to claim 7, **characterized in that** the spring (76) is a split ring the axial edges of which are hooked into the lugs (70, 72).

9. A hinge according to claim 7, **characterized in that** the rings (52, 54) can be moved in two opposite directions respectively to adjust the inclination of the squab and to fold it forwards, between a first position of attaching at least one coupling member (34a - 34d) respectively to the first and second flanges (24, 26) and a second position releasing said member (34a - 34d).

10. A hinge according to claim 9, **characterized in that** the coupling member is a lever (34a - 34d) which can turn about a bearing point (L) which, when said lever is attached to a flange (24, 26), is fixed relative to that flange (24, 26).

11. A seat for an automobile vehicle comprising at least one hinge (20) according to any one of the preceding claims.

## Patentansprüche

1. Gelenkbeschlag für einen Sitz, insbesondere für ein Kraftfahrzeug, der Art, die umfasst:
- zwei Verbindungsflansche (24, 26), von denen einer, der fest ist, dazu bestimmt ist, an einer Sitzfläche (A) des Sitzes befestigt zu werden, und der andere, der beweglich ist, dazu bestimmt ist, an einer Rückenlehne (D) des Sitzes befestigt zu werden, wobei diese Flansche (24, 26) zueinander um eine Gelenkachse (X) drehen können, die zu ihnen im Wesentlichen senkrecht verläuft,
- eine Steuervorrichtung (32), die von einer Ruheposition aus in mindestens eine Richtung drehbar um die Gelenkachse (X) montiert ist, und
- elastische Rückholvorrichtungen für die Steuervorrichtung (32) in ihre Ruheposition, die Vorrichtungen (76) zur annähernden Positionierung dieser Steuervorrichtung (32) umfassen,
**dadurch gekennzeichnet, dass** die elastischen Rückholvorrichtungen ferner Vorrichtungen (82) zur genauen Positionierung der Steuervorrichtung (32) umfassen, die anders sind als die Vorrichtungen zur annähernden Positionierung (76), wobei diese anderen Vorrichtungen (82) mindestens eine Druckfeder umfassen, die zwischen dem festen Flansch und der Steuervorrichtung (32) anliegt und die annähernde Ruheposition der Steuervorrichtung (32) feiner einstellt.

2. Gelenkbeschlag nach Anspruch 1, **dadurch gekennzeichnet, dass** die Steuervorrichtung (32) eine im Wesentlichen zylindrische Form hat und von mindestens einem Lager (P1) getragen wird, das in dem festen Flansch (24) vorgesehen ist, sowie dadurch, dass die Druckfeder (82) radial zwischen dem festen Flansch (24) und einer Abflachung (90) zur Positionierung der Steuervorrichtung (32) anliegt, in der Weise, dass sie die Abflachung (90) in eine Position zieht, die mit der genauen Ruheposition der Steuervorrichtung zusammenfällt.

3. Gelenkbeschlag nach Anspruch 2, **dadurch gekennzeichnet, dass** die Druckfeder (82) im Wesentlichen die Form einer Zunge hat, die zu einem U mit zwei flachen Armen (84, 86) umgebogen ist, die radial anliegen, und zwar der eine, der fest ist, an den Rand eines Rücksprungs (88) des Umfangs des Lagers (P1) und der andere, der beweglich ist, an die Positionierungs-Abflachung (90), wobei die Druckfeder (82) die Abflachung (90) in eine im Wesentlichen zu der der Arme parallelen Position (84, 86) zieht.

4. Gelenkbeschlag nach Anspruch 2 oder 3, **dadurch gekennzeichnet, dass** die Abflachung (90) von einer im Wesentlichen konkaven Fläche begrenzt ist, sodass sie den Kontakt des beweglichen Arms (86) mit dieser Abflachung (90) im Wesentlichen auf zwei Erzeugende der Steuervorrichtung (32) begrenzt.

5. Gelenkbeschlag nach Anspruch 3 oder 4, **dadurch gekennzeichnet, dass** das freie Ende des beweglichen Arms (86) zwei Befestigungsarme (92, 94) aufweist, die zwischen einer Seite des festen Flansches (24) und einer Erhöhung (96) der Steuervorrichtung (32) angeordnet sind, wobei sich die Befestigungsarme (92, 94) beidseits der Steuervorrichtung (32) quer zu dieser Steuervorrichtung (32) erstrecken.

6. Gelenkbeschlag nach Anspruch 5, **dadurch gekennzeichnet, dass** die Befestigungsarme (92, 94) in einer Ausbuchtung (98) der Seite des festen Flansches (24) untergebracht sind, welche die Dicke der Arme ausgleicht.

7. Gelenkbeschlag nach einem der vorstehenden Ansprüche, **dadurch gekennzeichnet, dass** er ferner Vorrichtungen (30) zum Zusammenkoppeln der Flansche (24, 26) umfasst, die von zwei drehbaren Ringen (52, 54) betätigt werden, die im Wesentlichen auf die Drehachse (X) zentriert sind und jeweils einen Vorsprung (70, 72) umfassen, der an ihrem Innenumfang vorgesehen ist, wobei die Steuervorrichtung mit einem Nocken (74) versehen ist, der zwischen den beiden Vorsprüngen (70, 72) angeordnet und dazu bestimmt ist, selektiv mit diesen beiden Vorsprüngen (70, 72) zusammenzuwirken, und zwar durch Drehung in entgegengesetzte Richtungen, wobei die Vorrichtungen zur annähernden Positionierung der Steuervorrichtung (32) eine Feder (76) mit Winkelwirkung umfassen, die an den Vorsprüngen (70, 72) in der Weise befestigt ist, dass sie die Ringe elastisch in entgegengesetzte Richtungen zurückholt und die Steuervorrichtung (32) durch Zusammenwirken der beiden Vorsprünge (70, 72) mit dem Nocken der Steuervorrichtung in Ruheposition zu bringen sucht.

8. Gelenkbeschlag nach Anspruch 7, **dadurch gekennzeichnet, dass** die Feder (76) aus einem geschlitzten Ring besteht, dessen Axialränder in den Vorsprüngen (70, 72) eingehängt sind.

9. Gelenkbeschlag nach Anspruch 7 oder 8, **dadurch gekennzeichnet, dass** die Ringe (52, 54) in zwei entgegengesetzte Richtungen bewegt werden können, nämlich jeweils zur Neigungseinstellung und zum Zurückklappen der Rückenlehne, und zwar zwischen einer ersten Position zumindest einer Verbindungsvorrichtung (34a bis 34d), die abhängig vom ersten bzw. zweiten Flansch (24, 26) ist, und einer zweiten Position der Freigabe dieser Vorichtung (34a bis 34d).

10. Gelenkbeschlag nach Anspruch 9, **dadurch gekennzeichnet, dass** die Verbindungsvorrichtung aus einem Hebel (34a bis 34d) besteht, der um einen Auflagepunkt (L) schwenken kann, der, wenn dieser Hebel abhängig von einem Flansch (24, 26) ist, fest bezüglich diesem Flansch (24, 26) ist.

11. Kraftfahrzeugsitz, **dadurch gekennzeichnet, dass** er mindestens einen Gelenkbeschlag (20) nach einem der vorstehenden Ansprüche umfasst.
